Europäisches Patentamt

European Patent Office

Office européen des brevets

(19)

(11) Veröffentlichungsnummer: **0 342 400 B1**

(12) # EUROPÄISCHE PATENTSCHRIFT

(45) Veröffentlichungstag der Patentschrift:
09.10.91 Patentblatt 91/41

(51) Int. Cl.⁵: **F16L 3/10**

(21) Anmeldenummer: **89107526.9**

(22) Anmeldetag: **26.04.89**

(54) **Rohrschelle als Bügelschelle.**

(30) Priorität: **19.05.88 DE 3817059**

(43) Veröffentlichungstag der Anmeldung:
**23.11.89 Patentblatt 89/47**

(45) Bekanntmachung des Hinweises auf die
Patenterteilung:
**09.10.91 Patentblatt 91/41**

(84) Benannte Vertragsstaaten:
**DE FR GB GR IT**

(56) Entgegenhaltungen:
**US-A- 4 101 103**
**US-A- 4 209 155**

(73) Patentinhaber: **LISEGA GMBH**
**Industriegebiet Hochkamp**
**W-2730 Zeven (DE)**

(72) Erfinder: **Hardtke, Hans Herlof**
**Bremervörder Strasse 3**
**W-2730 Zeven (DE)**

(74) Vertreter: **Lippert, Hans-Joachim, Dipl.-Ing. et al**
**Patentanwälte, Dahlke, Lippert, Stachow,**
**Tackenberg & Schönwald, P.O. Box 30 02 08,**
**Frankenforster Strasse 135-137**
**W-5060 Bergisch Gladbach 1 (DE)**

## Beschreibung

Die Erfindung bezieht sich auf eine Rohrschelle als Bügelschelle zur Halterung von Rohrleitungen u. dgl., bestehend aus einem Auflagerbock, einer Haltelasche und mindestens einem Rundstahlbügel, der an Querleisten des Auflagerbockes anschraubbar ist.

Um Rohrleitungen, insbesondere der Kraftwerkstechnik, aufhängen oder unterstützen zu können, werden Rohrschellen verwendet, welche in der Gestalt von Bügelschellen ausgebildet sind. Die Bügelschellen sind speziell für die Aufnahme dynamischer Kräfte ausgelegt. Im allgemeinen sieht die Konstruktionsweise eine Verbindung mit der Rohrleitung über Formschuß vor.

Die bekannten Rohrschellen als Bügelschellen weisen eine verhältnismäßig teure Konstruktion auf. Die Hauptteile sind entweder warm gebogen oder es handelt sich um eine Schweißkonstruktion, bei der der Auflagerbock, die Halteschelle und die Querleisten, die zur Aufnahme der Rundstahlbügel dienen, eine einheitliche Konstruktion darstellen. Dasselbe gilt für eine Konstruktion aus Stahlguß. Diese Konstruktionen sind arbeitsmäßig aufwendig und auch schwer im Gewicht.

Aufgabe der Erfindung ist es, eine Bügelschelle zu schaffen, deren Teile sich leicht miteinander verbinden lassen und die eine erhebliche Gewichtseinsparung aufweist. Die Erfindung zeichnet sich dadurch aus, daß der Auflagerbock der Bügelschelle aus einzelnen Plattenteilen, nämlich zwei Längsstegen, zwei Querlaschen zur Aufnahme des Rundstahlbügels und der Haltelasche losebleibend zusammengesetzt ist, wobei die einzelnen selbständigen Plattenteile mittels zapfenartiger und hintergreifender Teile miteinander verriegelt sind.

Durch eine solche Ausbildung der Bügelschelle ergibt sich eine erhebliche Vereinfachung in der Herstellung und in der Montage. Zugleich wird eine hohe Gewichtsverminderung erzielt, die bis zu etwa 75% gegenüber dem Gewicht der bisherigen Konstruktion betragen kann. Außerdem wird ein geringeres Transportvolumen erreicht. Durch die Gewichtsersparnis ergibt sich ferner eine bessere und leichtere Handhabbarkeit der Bügelschelle. Die Plattenteile, aus denen der Auflagerbock gebildet wird, werden zweckmäßig durch Ausstanzen oder Ausbrennen aus einer Blechplatte entsprechender Dicke hergestellt.

Gemäß einem weiteren Merkmal der Erfindung sind die Längsstege an ihren Endteilen mit zu der Aufhängeseite offenen Nuten versehen, die an der zur Mitte gekehrten Seite unterschnitten ausgebildet sind. Die Querlaschen können rechteckige Plattenstücke sein. An den Ecken eines Laschenendes können Rechteck-Ausschnitte angebracht sein. Die so gestalteten Plattenstücke greifen in die Unterschneidungen der Nuten der Längsstege ein. Hierbei können die Querlaschen mit mindestens einer Lochung zur Aufnahme des Bügels versehen sein. Auf diese Weise ergibt sich ein aus zwei Wandteilen und Querteilen zusammengesetzter Auflagerbock, der eine Hohlkastenform aufweist, wobei die Teile in sich fest miteinander verriegelt sind.

Nach einem anderen Merkmal der Erfindung erhalten die Längsstege in der Mitte Längsschlitze, die zum Einstecken von seitlich überstehenden Teilen der Haltelasche dienen.

Die Haltelasche kann hierzu an dem den Längsstegen zugekehrte Ende eine Verbreiterung aufweisen, in deren überstehenden Teilen Nuten zum Einstecken der Längsstege angeordnet sind. An dem anderen Ende der Verbreiterung sind Eckausschnitte vorgesehen. Auf diese Weise werden die Längsstege in der mittleren Querebene durch die Haltelasche miteinander verriegelt gehalten, so daß der Auflagerbock über der Länge durch drei beiderseitig wirkende Steckverbindungen ein steifer und starrer Hohlkasten darstellt. Die Plattenstücke, aus denen der hohlkastenförmige Auflagerbock zusammengesetzt ist, haben in sich durch entsprechende Dicke und auch werkstoffmäßig eine hohe Festigkeit, so daß der Auflagerbock zusammen mit der Haltelasche hohen Beanspruchungen gerecht wird.

Der untere Teil der Längsschlitze der Längsstege kann zusätzlich zur Aufnahme eines von Längssteg zu Längssteg führenden Schraubbolzens ausgebildet sein. Dies stellt eine zusätzliche Sicherung dar. Sogleich wird verhindert, daß die Haltelasche bei Nichtgebrauch sich von den Längsschlitzen der Längsstege lösen kann.

Die Erfindung wird anhand eines in der Zeichnung dargestellten Ausführungsbeispieles nachstehend erläutert:

Fig. 1    zeigt eine Rohrschelle als Bügelschelle gemäß der Erfindung in der Ansicht und im Schema.

Fig. 2    ist eine Seitenansicht der Rohrschelle der Fig. 1.

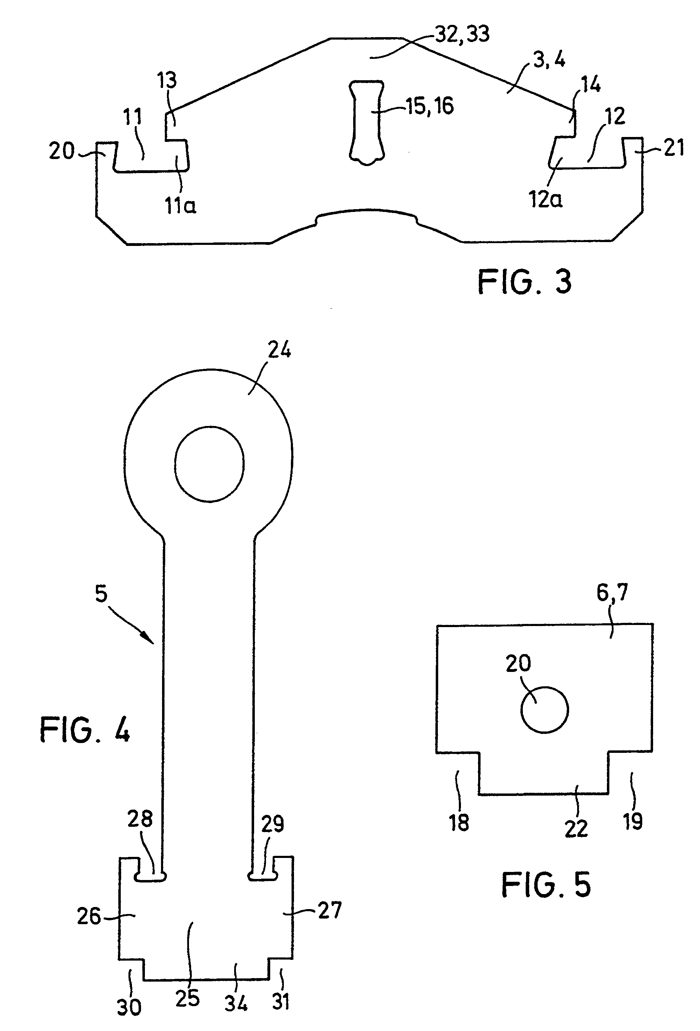

Fig. 3    stellt eine Ansicht auf einen Längssteg für sich dar.

Fig. 4    zeigt die Haltelasche für sich in Ansicht.

Fig. 5    ist eine Draufsicht auf eine Querlasche.

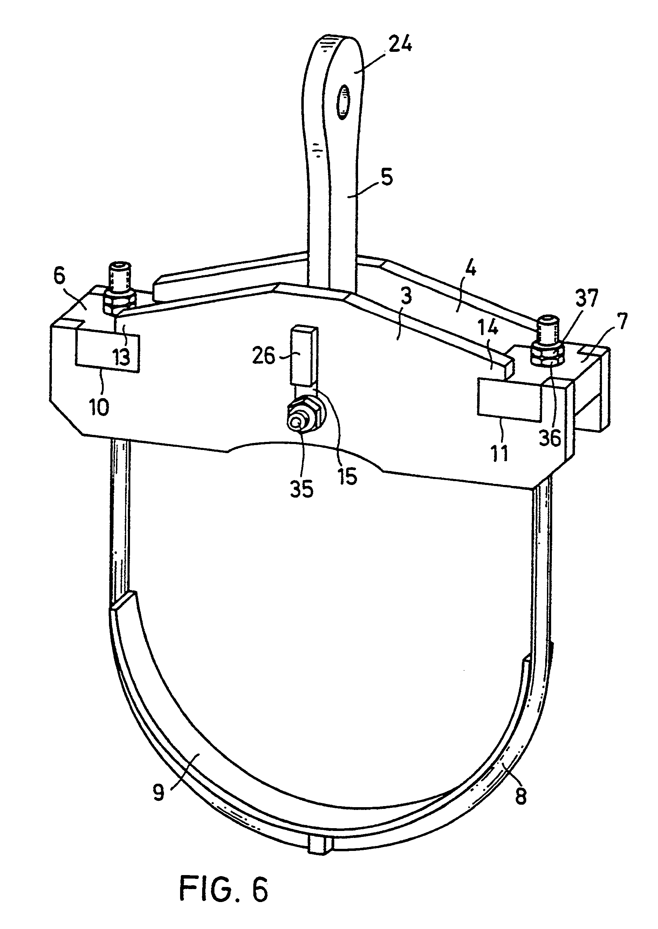

Fig. 6    veranschaulicht die Rohrschelle als Bügelschelle im Schaubild schematisch.

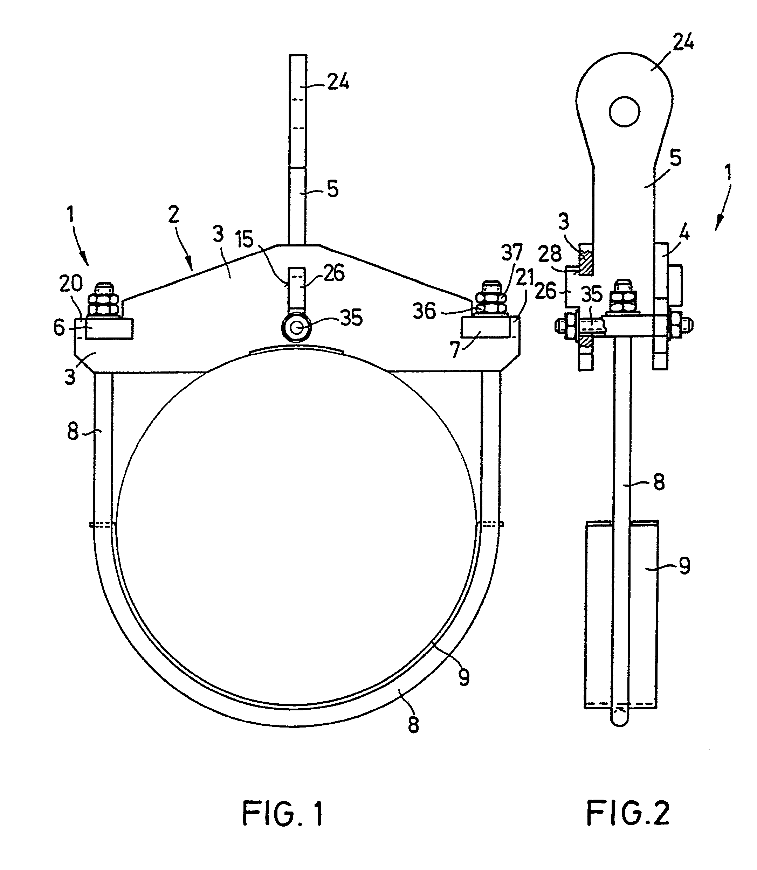

Die Bügelschelle 1 der Figuren 1 und 2 ist hinsichtlich des Auflagerbockes 2 nur aus Plattenteilen zusammengesetzt, die miteinander durch Übergreifen von vorstehenden Teilen zu einem kastenförmigen Auflagerbock vereinigt sind. Der Auflagerbock 2 weist zwei Längsstege 3 und 4 auf, zwischen denen in der Mitte eine Haltelasche 5 und an den Enden Querlaschen 6 und 7 angeordnet sind. Mit 8 ist ein Rundstahlbügel bezeichnet, dessen freie Enden an den Querlaschen 6 und 7 angeschraubt sind. Der Rundstahlbügel 8 kann im unteren Teil mit einem Einlageblech 9 versehen sein.

Die Längsstege 3, 4 als Plattenstücke gleichmäßiger Dicke weisen an ihren Endteilen zur Aufhängeseite gerichtete offene Nuten 11, 12 auf, die an der zur Mittenebene gekehrten Seite mit Unterschneidungen 11a, 12a versehen sind, so daß sich überhängende Teile 13 und 14 ergeben. In der Mitte sind die Längsstege 3, 4 mit Schlitzen 15, 16 versehen, durch die die seitlich überstehenden Teile der Haltelasche 5 greifen können.

Die Querlaschen 6, 7 sind rechteckige Plattenstücke. An einer Seite der Plattenstücke 6, 7 sind Rechteckausschnitte 18 und 19 an den Querlaschen angebracht. Außerdem weist die Querschlasche 6, 7 mindestens eine Bohrung 20 zum Durchstecken der freien Enden des Bügels 8 auf. Die Querlaschen 6, 7 werden in die Nuten 11, 12 der Längsstege 3, 4 eingelegt, wobei die beiden Nuten 11, 12 der stehengebliebenen Teile 20, 21 in die Eckausschnitte 18, 19 der Querlaschen 6, 7 greifen und die anderen Enden der Querlaschen unter die vorstehenden Teile 13, 14 der Längsstege 3, 4 zu liegen kommen. Die Zwischenteile 22 der Querlaschen 6, 7 bestimmen die Breite des hohlkastenförmigen Auflagerbocks 2.

Die Haltelasche 5, die an einem Ende mit einem Auge 24 versehen ist, weist an dem anderen Ende eine Verbreiterung 25 auf. Hierbei sind die überstehenden Teile 26 und 27 der Haltelasche 5 mit Nuten 28 und 29 und am anderen Ende mit Eckausschnitten 30 und 31 versehen. Die vorstehenden Teile 26 und 27 greifen durch die Längsschlitze 15 und 16 der Längsstege 3, 4, wobei die geschlossenen Teile 32, 33 der Längsstege 3, 4 in die Nuten 28, 29 der Haltelasche 5 eingreifen. Dadurch ergibt sich eine bajonettartige Verriegelung der Längsstege 3, 4 mit der Haltelasche 5. Der zwischen den Eckausschnitten 30 und 31 verbleibende Teil 34 entspricht in der Länge dem Teil 22 der Querlaschen 6, 7. Der kastenförmige Auflagerbock 2 ist sowohl an den Enden als auch in der Mitte durch die Querlaschen 6, 7 und die Haltelasche 5 miteinander bajonettartig verriegelt.

In dem unteren Teil der Längsschlitze 15, 16 der Längsstege 3, 4 kann ein Schraubbolzen 35 vorgesehen sein, der als zusätzliche Sicherung zur Bewahrung der Kastenform des Auflagerbockes 2 bei nichtgebrauchter Bügelschelle dient. Die durch die Querlaschen 6, 7 hindurchgesteckten Enden des Bügels 8 können durch Mutter 36 und Kontermutter 37 mit dem Auflagerbock 2 befestigt sein.

## Patentansprüche

1. Rohrschelle als Bügelschelle zur Halterung von Rohrleitungen u. dgl., bestehend aus einem Auflagerbock (2), einer Haltelasche (5) und mindestens einem Rundstahlbügel (8), der an Querlaschen (6, 7) des Auflagerbockes (2) anschraubbar ist, dadurch gekennzeichnet, daß der Auflagerbock (2) der Bügelschelle (1) aus einzelnen Plattenteilen, nämlich zwei Längsstegen (3, 4), zwei Querlaschen (6, 7) zur Aufnahme des Rundstahlbügels (8) und der Haltelasche (5) losebleibend zusammengesetzt ist und daß die einzelnen selbständigen Plattenteile (3, 4, 6, 7 ; 5) mittels zapfenartiger und hintergreifender Teile (11, 12, 26, 27) miteinander verriegelt sind.

2. Rohrschelle nach Anspruch 1, dadurch gekennzeichnet, daß die Längsstege (3, 4) an ihren Endteilen mit zu der Aufhängeseite offenen Nuten (11, 12) versehen sind, die an der zur Mittenebene gerichteten Seite mit Unterschneidungen (11a, 12a) ausgebildet sind.

3. Rohrschelle nach Anspruch 1 oder 2, dadurch gekennzeichnet, daß die Querlaschen (6) oder (7) als rechteckige Plattenstücke ausgebildet sind und an den Ecken eines Endes Recht-Eckausschnitte (18, 19) aufweisen und daß die Plattenstücke (6, 7) in die Unterschneidungen (11a, 12a) der Nuten (11, 12) der Längsstege (3, 4) greifen.

4. Rohrschelle nach einem der Ansprüche 1 bis 3, dadurch gekennzeichnet, daß die Querlaschen (6, 7) mit mindestens einer Lochung (20) zur Aufnahme der Bügelenden versehen sind.

5. Rohrschelle nach einem der Ansprüche 1 bis 4, dadurch gekennzeichnet, daß die Längsstege (3, 4) in der Mitte Längsschlitze (15, 16) zum Einstecken von seitlich überstehenden Teilen (26, 27) aufweisen.

6. Rohrschelle nach einem der Ansprüche 1 bis 5, dadurch gekennzeichnet, daß die Haltelasche (5) an dem den Längsstegen (3, 4) zugekehrten Ende eine Verbreiterung (25) aufweist, in deren überstehenden Teilen (26, 27) Nuten (28, 29) zum Einstecken der Längsstege (3, 4) angeordnet sind, und daß an dem anderen Ende der Verbreiterung Eckausschnitte (30, 31) vorgesehen sind.

7. Rohrschellen nach einem der Ansprüche 1 bis 6, dadurch gekennzeichnet, daß der untere Teil der Längsschlitze (15, 16) der Längsstege (3, 4) zur Aufnahme eines von Längssteg (3) zu Längssteg (4) führenden Schraubbolzens (35) ausgebildet ist.

## Claims

1. Pipe clamp as a bracket clamp for retaining pipelines and the like, comprising a support pedestal (2), a retaining lug (5) and at least one round steel bracket (8) which can be screwed on transverse lugs (6, 7) of the support pedestal (2), characterised in that the support pedestal (2) of the bracket clamp (1) is made up in a loose-fitting manner of individual plate portions, viz. two longitudinal crosspieces (3, 4), two transverse lugs (6, 7) for receiving the round steel bracket (8) and the retaining lug (5) and in that the individual independent plate portions (3, 4, 6, 7 ; 5) are locked together by means of pin-like and retro-engaging portions (11, 12, 26, 27).

2. Pipe clamp according to claim 1, characterised in that the longitudinal crosspieces (3, 4) are provided on their end portions with grooves (11, 12) open to the suspension side which are formed with undercuts (11a, 12a) of the side towards the centre plane.

3. Pipe clamp according to claim 1 or 2, characterised in that the transverse lugs (6) or (7) are formed as rectangular plate pieces and at the corners of one end have rectangular cutouts (18, 19) and in that the plate pieces (6, 7) engage into the undercuts (11a, 12a) of the grooves (11, 12) of the longitudinal crosspieces (3, 4).

4. Pipe clamp according to one of claims 1 to 3, characterised in that the transverse lugs (6, 7) are provided with at least one aperture (20) for receiving the bracket ends.

5. Pipe clamp according to one of claims 1 to 4, characterised in that the longitudinal crosspieces (3, 4) have longitudinal slots (15, 16) in the middle for the insertion of laterally protrudinging portions (26, 27).

6. Pipe clamp according to one of claims 1 to 5, characterised in that at the end facing the longitudinal crosspieces (3, 4) the retaining bracket (5) has a wideneb portion (25) in whose protruding portions grooves (28, 29) are arranged for the insertion of the longitudinal crosspieces (3, 4), and in that angular cutouts (30, 31) are provided at the other end of the widened portion.

7. Pipe clamp according to one of claims 1 to 6, characterised in that the lower portion of the longitudinal slots (15, 16) of the longitudinal crosspieces (3, 4) is formed to receive a threaded pin (35) leading from longitudinal crosspiece (3) to longitudinal cross piece (4).

## Revendications

1. Collier de serrage réalisé sous la forme d'un collier en étrier destiné à maintenir des tuyauteries et similaires, constitué d'un bloc d'appui (2), d'une patte de fixation (5) et d'au moins un étrier en acier rond (8) qui peut être vissé sur des pattes transversales (6, 7) du bloc d'appui, caractérisé en ce que le bloc d'appui (2) du collier en étrier (1) est constitué d'éléments individuels séparés en forme de plaques, à savoir de deux montants longitudinaux (3, 4), de deux pattes transversales (6, 7) destinées à recevoir l'étrier en acier rond (8), et de la patte de fixation (5), et en ce que les éléments individuels indépendants en forme de plaques (3, 4, 6, 7 ; 5) sont verrouillés les uns aux autres à l'aide de parties (11, 12, 26, 27) du genre tenons, s'engageant derrière les éléments.

2. Collier de serrage selon la revendication 1, caractérisé en ce que les montants longitudinaux (3, 4) sont pourvus en leurs parties terminales d'encoches (11, 12) ouvertes vers le côté d'accrochage, qui présentent des parties entaillées (11a, 12a) sur le côté tourné vers le plan médian.

3. Collier de serrage selon la revendication 1 ou 2, caractérisé en ce que les pattes transversales (6) ou (7) sont réalisées sous la forme de plaques retangulaires et présentent, dans les coins d'une de leurs extrémités, des découpures en équerres (18, 19), et en ce que les éléments en forme de plaques (6, 7) s'engagent dans les parties entaillées (11a, 12a) des encoches (11, 12) des montants longitudinaux (3, 4).

4. Collier de serrage selon l'une des revendications 1 à 3, caractérisé en ce que les pattes transversales (6, 7) sont munies d'au moins un trou (20) pour recevoir les extrémités de l'étrier.

5. Collier de serrage selon l'une des revendications 1 à 4, caractérisé en ce que les montants longitudinaux (3, 4) présentent, en leur milieu, des fentes longitudinales (15, 16) pour l'emboîtement de parties latéralement dépassantes (26, 27).

6. Collier de serrage selon l'une des revendications 1 à 5, caractérisé en ce que la patte de fixation (5) présente, à son extrémité tournée vers les montants longitudinaux (3, 4), un élargissement (25), dans les parties dépassantes (26, 27) duquel sont disposées des encoches (28, 29) en vue de l'emboîtement des montants longitudinaux (3, 4), et en ce que des découpures en équerres (30, 31) sont prévues à l'autre extrémité de l'élargissement.

7. Collier de serrage selon l'une des revendications 1 à 6, caractérisé en ce que la partie inférieure des fentes longitudinales (15, 16) des montants longitudinaux (3, 4) est configurée de manière à recevoir un boulon fileté (35) menant d'un montant longitudinal (3) à l'autre (4).

FIG. 1          FIG.2

FIG. 3

FIG. 4

FIG. 5

FIG. 6